# DEMANDE DE BREVET EUROPEEN

(11) **EP 1 118 804 A2**
(43) Date de publication de la demande: **25.07.2001**
(21) Numéro de dépôt: 01400117.6
(22) Date de dépôt: 16.01.2001
(51) Int. Cl.: F16H 63/18

(54) **Dispositif de passage de vitesse du type à barillet, destiné notamment à équiper une boîte de vitesses robotisée**

(30) Priorité: 18.01.2000 FR 0000591
(71) Demandeur: Renault, 92100 Boulogne Billancourt (FR)
(72) Inventeur: Maillard, Jean-Pierre, 78480 Verneuil sur Seine (FR)

(57) **Abrégé**

Ce dispositif comprend un barillet (B) muni de deux pistes de guidage (1a, 1b) à sa périphérie.

Ces pistes comprennent chacune deux chicanes (9a, 11a; 9b) destinées, sous l'effet de la rotation dudit barillet (B), à entraîner le déplacement axial de deux fourchettes de passage de vitesses (5a, 5b).

Ce dispositif est remarquable en ce qu'il comprend des moyens (A) pour débrayer sélectivement ladite fourchette de ladite chicane, de manière à maintenir ladite fourchette au point mort lors du défilement de ladite chicane, et à sauter ainsi la vitesse correspondante.

Application aux boîtes de vitesses robotisées pour véhicules automobiles.

## Description

La présente invention est relative à un dispositif de passage de vitesses du type à barillet, destiné notamment à équiper une boîte de vitesses robotisée pour véhicule automobile.

On connaît de la technique antérieure un système de passage de vitesses du type à barillet, comprenant un barillet de forme cylindrique muni de pistes de guidage à sa périphérie, ces pistes étant destinées, sous l'effet de la rotation dudit barillet, à entraîner le déplacement axial de fourchettes de passage de vitesses.

Un tel système ne permet qu'un passage séquentiel des vitesses, c'est-à-dire un passage d'une vitesse donnée à une vitesse directement supérieure ou inférieure: aucun saut de vitesse n'est envisageable.

La présente invention a pour but de fournir un dispositif de passage de vitesses du type à barillet permettant de sauter sélectivement certaines vitesses.

On atteint ce but de l'invention avec un dispositif de passage de vitesses du type à barillet, comprenant un barillet muni d'au moins une piste de guidage à sa périphérie, cette piste présentant au moins une chicane destinée, sous l'effet de la rotation dudit barillet, à entraîner le déplacement axial d'au moins une fourchette de passage de vitesse, remarquable ce qu'il comprend des moyens pour débrayer sélectivement ladite fourchette de ladite chicane, de manière à maintenir ladite fourchette au point mort lors du défilement de ladite chicane, et à sauter ainsi la vitesse correspondante.

Grâce à ces caractéristiques, on peut sélectivement maintenir au point mort les fourchettes de passage de vitesses lors de la rotation du barillet, et ainsi sauter les vitesses souhaitées.

Suivant d'autres caractéristiques de l'invention:
- lesdits moyens comprennent un ensemble d'actionneur interposé entre ladite piste de guidage et ladite fourchette, cet ensemble d'actionneur comportant:
   - au moins un module traversé par une barre présentant au moins un évidement, ce module coopérant d'une part avec ladite piste par l'intermédiaire d'un pion rappelé élastiquement contre ladite barre, et d'autre part avec un doigt solidaire de ladite fourchette, et
   - des moyens pour déplacer sélectivement ledit évidement au droit dudit pion de manière à écarter ce dernier du fond de ladite piste lorsqu'on souhaite sauter ladite vitesse,
- ledit évidement est un étranglement formé à la périphérie de ladite barre, et lesdits moyens de déplacement sélectif comprennent un organe de commande permettant de faire coulisser axialement ladite barre,
- ledit évidement est une cavité formée à la périphérie de ladite barre, et lesdits moyens de déplacement sélectif comprennent un organe de commande permettant de faire pivoter ladite barre autour de son axe,
- l'extension définissant le rayon intérieur de ladite chicane est séparée du bord de cette chicane par une certaine hauteur, de sorte que cette extension forme une marche placée sur le fond de ladite piste, et ledit ensemble d'actionneur est dimensionné de manière à permettre d'écarter l'extrémité dudit pion du fond de ladite piste d'une distance sensiblement égale à ladite hauteur,
- ledit barillet est muni de deux pistes de guidage à sa périphérie, chacune de ces pistes comprenant deux chicanes orientées selon des directions axialement opposées, ces chicanes étant décalées angulairement les unes par rapport aux autres et étant destinées à entraîner le déplacement axial de deux fourchettes de passage de vitesses.

D'autres caractéristiques et avantages de la présente invention apparaîtront à la lecture de la description qui va suivre et à l'examen du dessin annexé, dans lequel:
- la figure 1 est une vue en perspective du dispositif selon l'invention, dans le cas d'un barillet muni de première et deuxième pistes destinées à entraîner le déplacement, par l'intermédiaire d'un ensemble d'actionneur, de première et deuxième fourchettes de passage de vitesses montées coulissantes sur un rail,
- la figure 2 est une vue en coupe radiale de la première piste, selon un plan situé au droit d'une chicane de cette piste,
- la figure 3 est une vue en coupe partielle du dispositif de la figure 1, d'une part selon un plan passant par les axes Ab du barillet et Aa de l'ensemble d'actionneur, et d'autre part selon un plan passant par les axes Aa de cet ensemble d'actionneur et Ar dudit rail, le barillet se trouvant dans la même position que sur la figure 1, et les première et deuxième fourchettes étant respectivement en situation de saut de vitesse et de point mort,
- la figure 4 est analogue à la figure 3, à ceci près que le barillet se trouve dans une position différente et que les première et deuxième fourchettes sont respectivement en situation de point mort et de saut de vitesse,
- les figures 5 et 6 représentent un autre mode de réalisation du dispositif selon l'invention, selon des vues analogues à celles des figures 3 et 4.

Sur ces figures, des références numériques identiques désignent des organes ou ensembles d'organes identiques ou analogues.

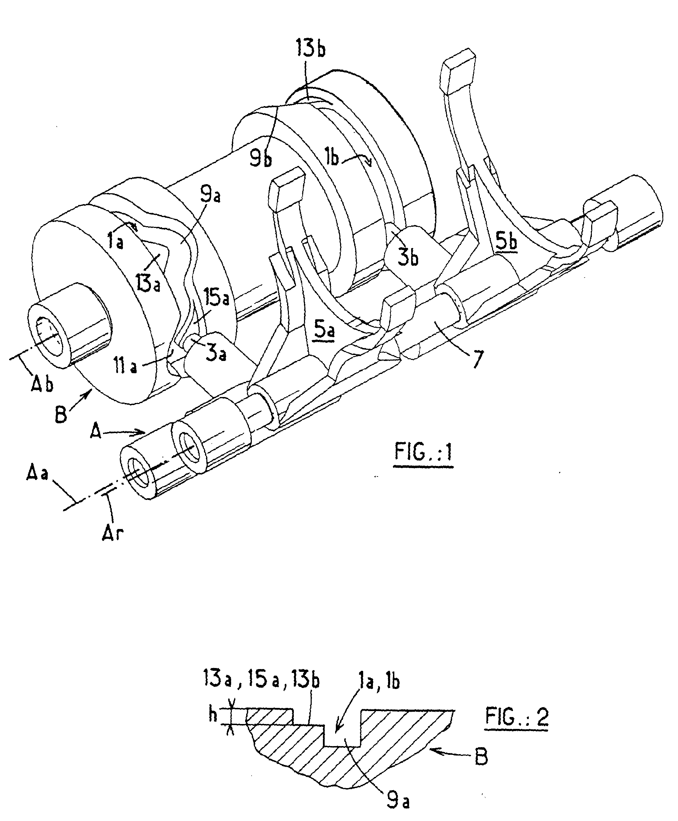

On se reporte à présent à la figure 1, sur laquelle on voit que le dispositif selon l'invention comprend un barillet B monté rotatif autour d'un axe Ab.

Dans l'exemple représenté, ce barillet comporte à sa périphérie deux rainures formant des première 1a et deuxième 1b pistes de guidage.

Ces première 1a et deuxième 1b pistes coopèrent respectivement avec des premier 3a et deuxième 3b pions disposés selon une même génératrice du barillet B et faisant partie d'un ensemble d'actionneur A, lequel constitue une partie essentielle du dispositif selon l'invention.

Comme cela apparaîtra plus clairement par la suite, cet ensemble d'actionneur A coopère également avec des première 5a et deuxième 5b fourchettes de passage de vitesses montées coulissantes sur un rail 7 orienté selon une direction sensiblement parallèle à celle de l'axe Ab du barillet B.

Comme cela est connu de l'homme du métier, ces fourchettes 5a, 5b sont destinées à coopérer avec des baladeurs susceptibles de craboter des pignons fous de vitesses (non représentés).

La première piste 1a comprend deux chicanes 9a, 11a orientées selon des directions axialement opposées.

De même, la deuxième piste 1b comprend deux chicanes analogues à celles de la première piste 1a, une seule d'entre elles 9b étant visible sur la figure 1.

Les chicanes des deux pistes 1a, 1b sont décalées angulairement les unes par rapport aux autres, de manière que seule une chicane à la fois puisse se trouver au droit de l'un des pions 3a, 3b.

Bien entendu, le nombre des pistes et des chicanes indiqué ci-dessus est fourni à titre purement illustratif, et l'étendue de l'invention n'est nullement limitée à cet exemple particulier.

Comme cela apparaît de manière particulièrement claire sur la figure 2, les sections des chicanes des pistes 1a et 1b diffèrent de celles du reste de ces pistes.

En effet, les extensions 13a, 15a, 13b définissant les rayons intérieurs de ces chicanes sont séparées de la crête de ces chicanes par une certaine hauteur h, de sorte que ces extensions forment des marches placées sur le fond des pistes 1a, 1b.

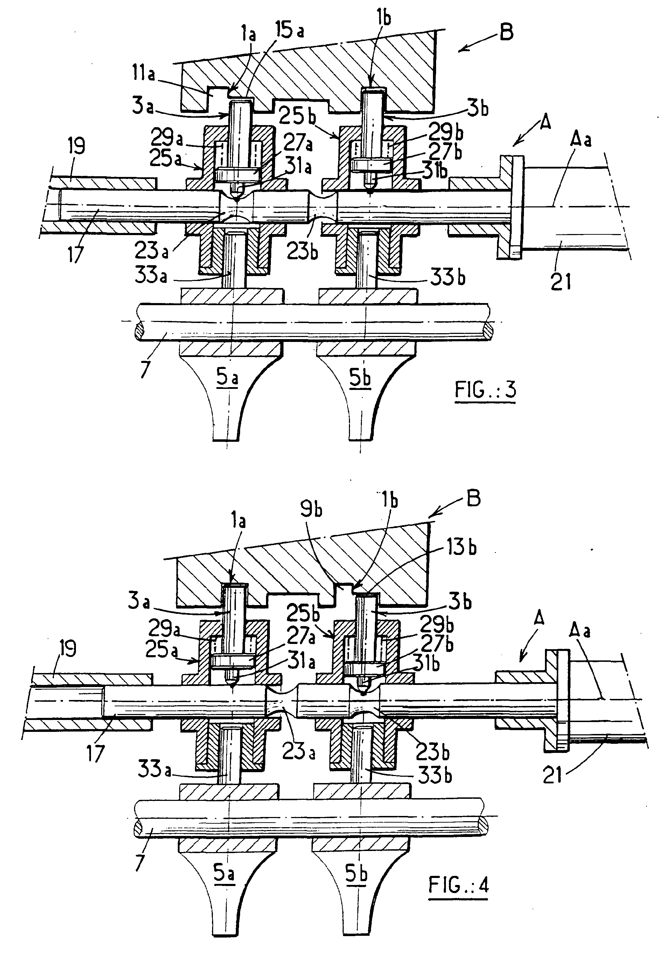

On se reporte à présent à la figure 3, sur laquelle on voit en détail la structure de l'ensemble d'actionneur A, et la manière dont cet ensemble coopère d'une part avec les première 1a et deuxième 1b pistes, et d'autre part avec les première 5a et deuxième 5b fourchettes.

Comme cela apparaît sur cette figure, l'ensemble d'actionneur A comprend une barre 17 d'axe Aa dont une extrémité est montée coulissante dans un manchon 19, et dont l'autre extrémité est reliée à un organe de commande 21 susceptible de se déplacer selon la direction de l'axe Aa.

La barre 17 comporte à sa périphérie des premier 23a et deuxième 23b étranglements séparés par une distance inférieure à celle séparant axialement les première 1a et deuxième 1b pistes. La profondeur maximale de ces étranglements est sensiblement égale à la hauteur h mentionnée ci-dessus.

La barre 17 traverse des premier 25a et deuxième 25b modules dans lesquels elle est susceptible de coulisser, ces modules recevant les premier 3a et deuxième 3b pions mentionnés plus haut.

Chacun des pions 3a, 3b comprend une jupe 27a, 27b contre laquelle s'appuie un ressort 29a, 29b tendant à rappeler le pion vers la barre 17, ainsi qu'un ergot 31a, 31b susceptible de coopérer avec l'étranglement 23a, 23b.

Chacun des premier 25a et deuxième 25b modules reçoit par ailleurs un doigt 33a, 33b solidaire respectivement des première 5a et deuxième 5b fourchettes.

Sur la figure 3, le barillet B se trouve dans la même position que sur la figure 1, et la barre 17 est positionnée de sorte que le premier étranglement 23a se trouve au droit du premier pion 3a.

Sous l'effet du ressort 29a, l'ergot 31a bute contre le fond du premier étranglement 23a, et l'extrémité du pion 3a, qui est écartée du fond de la première piste 1a d'une distance sensiblement égale à la hauteur h, se trouve en vis-à-vis de l'extension 15a.

Le deuxième étranglement 23b se trouve entre les premier 3a et deuxième 3b pions, de sorte que l'extrémité du deuxième pion 3b atteint le fond de la deuxième piste 1b.

Dans la configuration de la figure 3, les fourchettes 5a et 5b se trouvent respectivement en situation de saut de vitesse et de point mort.

Sur la figure 4, le barillet B se trouve dans une position telle que la chicane 9b est placée au droit du deuxième pion 3b.

Par ailleurs, la barre 17 a coulissé vers la droite de la feuille par rapport à la figure 3, de sorte que le premier étranglement 23a se trouve entre les premier 3a et deuxième 3b pions, et que le deuxième étranglement 23b se trouve au droit du deuxième pion 3b.

Dans cette configuration, les premier 3a et deuxième 3b pions se trouvent dans des positions inverses de celles décrites ci-avant, et les fourchettes 5a et 5b se trouvent respectivement en situation de point mort et de saut de vitesse.

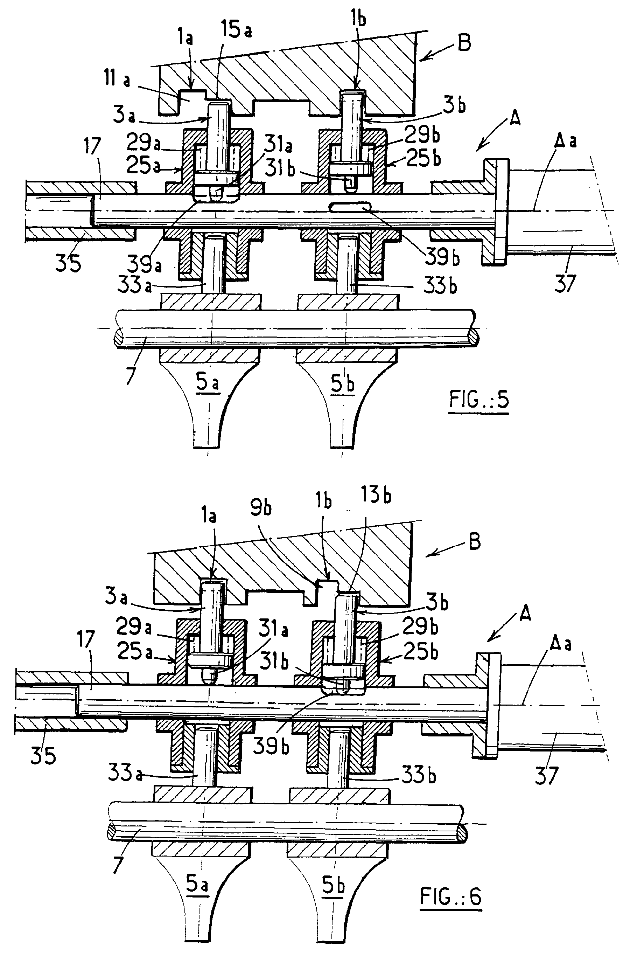

On a représenté sur les figures 5 et 6 un autre mode de réalisation de l'invention selon des vues analogues à celles des figures 3 et 4.

Dans ce mode de réalisation, l'une des extrémités de la barre 17 est montée rotative dans un palier 35, et l'autre extrémité de cette barre est reliée à un organe de commande 37 susceptible de pivoter autour de l'axe Aa.

Les premier 23a et deuxième 23b étranglements du mode de réalisation précédent sont remplacés par des première 39a et deuxième 39b cavités formées à la périphérie de la barre 17 et décalées angulairement.

Comme on peut le comprendre aisément, on retrouve les configurations des figures 3 et 4 en faisant pivoter la barre 17 autour de l'axe Aa, de manière à amener respectivement les première 39a et deuxième 39b cavités au droit des premier 3a et deuxième 3b pions.

Le fonctionnement et les avantages du dispositif selon l'invention découlent directement de la description qui précède.

Lorsque l'on souhaite par exemple passer la vitesse correspondant à la chicane 11a de la première piste 1a, on positionne la barre 17 avec l'organe de commande 21 (respectivement 37) de manière à se trouver dans la configuration représentée sur la figure 4 (respectivement sur la figure 6), ou dans toute configuration où aucun des deux étranglements 23a, 23b (respectivement où aucune des deux cavités 39a, 39b) ne se trouve au droit des deux pions 3a, 3b.

Dans ces configurations, l'extrémité du premier pion 3a atteint le fond de la première piste 1a.

On fait ensuite tourner le barillet B autour de son axe Ab jusqu'à ce que le premier pion 3a se trouve engagé dans la chicane 11a.

Du fait que le pion 3a atteint le fond de la piste la, il est déplacé axialement par l'extension 15a lorsque celle-ci arrive à son niveau.

Ce déplacement axial a pour effet de faire coulisser le premier module 25a le long de la barre 17 et, par voie de conséquence, la première fourchette 5a le long du rail 7.

Cette fourchette entraîne un baladeur qui peut alors craboter un pignon fou de vitesse (non représentés) correspondant à la vitesse souhaitée.

Si, au contraire, on souhaite sauter la vitesse correspondant à la chicane 11a, on positionne la barre 17 avec l'organe de commande 21 (respectivement 37) de manière à se trouver dans la configuration représentée sur la figure 3 (respectivement sur la figure 5).

Dans cette configuration, l'extrémité du premier pion 3a est écartée du fond de la piste 1a d'une distance sensiblement égale à la hauteur h séparant l'extension 15a de la crête de la piste 1a.

Ainsi, lorsque la chicane 11a arrive au droit du premier pion 3a, l'extension 15a défile devant le pion 3a sans solliciter celui-ci, de sorte que ce pion reste immobile et, par conséquent, que la première fourchette 5a reste au point mort.

Comme on peut le comprendre, on débraye ainsi en quelque sorte la fourchette 5a de la chicane 11a, ce qui permet de sauter la vitesse correspondante.

Bien entendu, l'exposé qui précède est transposable aux passages de vitesses correspondant à l'autre chicane 9a de la première piste 1a, ainsi qu'aux chicanes de la deuxième piste 1b.

Comme on peut le comprendre à présent, le dispositif selon l'invention comprend des moyens simples permettant sélectivement de sauter des vitesses lorsque le barillet B est mis en rotation.

Un tel dispositif est particulièrement adapté aux boîtes de vitesses robotisées pour véhicules automobiles, dans lesquelles il est fréquemment souhaitable de pouvoir directement rétrograder, par exemple, de la cinquième à la troisième, ou de la quatrième à la seconde vitesse.

On remarquera que le mode de réalisation des figures 5 et 6 est particulièrement avantageux en ceci qu'il ne nécessite aucun déplacement axial de la barre 17, ce qui permet d'obtenir un encombrement minimal.

On remarquera également que les extensions 13a, 15a, 13b pourraient, en variante, atteindre la crête des pistes 1a et 1b.

Cependant, la course des pions 3a, 3b devrait alors être plus longue pour maintenir les fourchettes de passage de vitesses au point mort lors du défilement des chicanes, ce qui entraînerait un encombrement plus important de l'ensemble d'actionneur.

## Revendications

1. Dispositif de passage de vitesses du type à barillet, comprenant :
- un barillet (B) muni d'au moins une piste de guidage (1a, 1b) à sa périphérie, cette piste présentant au moins une chicane (9a, 11a, 9b) destinée, sous l'effet de la rotation dudit barillet (B), à entraîner le déplacement axial d'au moins une fourchette de passage de vitesse (5a, 5b), et
- des moyens (A) pour débrayer sélectivement ladite fourchette de ladite chicane, de manière à maintenir ladite fourchette au point mort lors du défilement de ladite chicane, et à sauter ainsi la vitesse correspondante,
caractérisé en ce que lesdits moyens comprennent un ensemble d'actionneur (A) interposé entre ladite piste de guidage (1a, 1b) et ladite fourchette (5a, 5b), cet ensemble d'actionneur comportant:
- au moins un module (25a, 25b) traversé par une barre (17) présentant au moins un évidement (23a, 23b; 39a, 39b), ce module (25a, 25b) coopérant d'une part avec ladite piste (1a, 1b) par l'intermédiaire d'un pion (3a, 3b) rappelé élastiquement contre ladite barre (17), et d'autre part avec un doigt (33a, 33b) solidaire de ladite fourchette (5a, 5b), et
- des moyens (21; 37) pour déplacer sélectivement ledit évidement (23a, 23b; 39a, 39b) au droit dudit pion (3a, 3b) de manière à écarter ce dernier du fond de ladite piste (1a, 1b) lorsqu'on souhaite sauter ladite vitesse.

2. Dispositif selon la revendication 1, caractérisé en ce que ledit évidement est un étranglement (23a, 23b) formé à la périphérie de ladite barre (17), et en ce que lesdits moyens de déplacement sélectif comprennent un organe de commande (21) permettant de faire coulisser axialement ladite barre (17).

3. Dispositif selon la revendication 1, caractérisé en ce que ledit évidement est une cavité (39a, 39b) formée à la périphérie de ladite barre (17), et en ce que lesdits moyens de déplacement sélectif comprennent un organe de commande (37) permettant de faire pivoter ladite barre (17) autour de son axe (Aa).

4. Dispositif selon l'une quelconque des revendications précédentes, caractérisé en ce que l'extension (13a, 15a, 13b) définissant le rayon intérieur de ladite chicane (9a, 11a, 9b) est séparée du bord de cette chicane par une certaine hauteur (h), de sorte que cette extension forme une marche placée sur le fond de ladite piste (1a, 1b), et en ce que ledit ensemble d'actionneur (A) est dimensionné de manière à permettre d'écarter l'extrémité dudit pion (3a, 3b) du fond de ladite piste (1a, 1b) d'une distance sensiblement égale à ladite hauteur (h).

5. Dispositif selon l'une quelconque des revendications précédentes, caractérisé en ce que ledit barillet (B) est muni de deux pistes de guidage (1a, 1b) à sa périphérie, chacune de ces pistes comprenant deux chicanes (9a, 11a; 9b) orientées selon des directions axialement opposées, ces chicanes étant décalées angulairement les unes par rapport aux autres et étant destinées à entraîner le déplacement axial de deux fourchettes de passage de vitesses (5a, 5b).
